# EUROPEAN PATENT APPLICATION

(11) **EP 4 682 659 A1**
(43) Date of publication of application: **21.01.2026**
(21) Application number: 24787835.8
(22) Date of filing: 05.03.2024
(51) Int. Cl.: G05B 23/02

(54) **MONITORING METHOD, APPARATUS AND SYSTEM**

(30) Priority: 12.04.2023 CN 202310415634
(71) Applicant: Shenzhen Yinwang Intelligent Technologies Co., Ltd., Shenzhen, Guangdong 518110 (CN)
(72) Inventor: ZHAO, Xun, Shenzhen, Guangdong 518129 (CN); LI, Mingchao, Shenzhen, Guangdong 518129 (CN); YANG, Miao, Shenzhen, Guangdong 518129 (CN)
(74) Representative: Körber, Martin Hans
(86) International application number: PCT/CN2024/080054
(87) International publication number: WO 2024/212729

(57) **Abstract**

A monitoring method, apparatus, and system are provided. The method may be applied to the field of intelligent driving. The method includes: determining operational design condition ODC information of an area, where the ODC information indicates an ODC object and a status of the ODC object (S801); obtaining a preset ODC element of a vehicle (S802); and determining, based on the ODC information of the area and the preset ODC element, whether an ODC of the vehicle exceeds a running boundary (S803). The provided monitoring method may be applied to a new energy vehicle or an intelligent vehicle. This helps improve reliability of a result of determining whether the ODC of the vehicle exceeds the running boundary, to help ensure vehicle safety. In addition, an ODC object or a status of an ODC object that makes the ODC of the vehicle exceed the running boundary can be further determined, to help assist the vehicle in updating the preset ODC element.

## Description

This application claims priority to Chinese Patent Application No. 202310415634.2, filed with the China National Intellectual Property Administration on April 12, 2023, and entitled "MONITORING METHOD, APPARATUS, AND SYSTEM", which is incorporated herein by reference in its entirety.

### TECHNICAL FIELD

This application relates to the field of intelligent driving, and more specifically, to a monitoring method, apparatus, and system.

### BACKGROUND

With rapid development and transformation of the automobile industry, autonomous driving vehicles are becoming deeply integrated with industries such as the Internet, artificial intelligence, and information communication, accelerating a pace of entering a new era of intelligent networking. A basis for safe use of autonomous driving technologies is to establish and convey functions and limitations of the technologies to users. A first step to define a function of an automated driving system (automated driving systems, ADS) is to define an operational design condition (operational design condition, ODC) of the automated driving system. In the autonomous driving technologies, the ODC specifies various conditions, mainly including an operational design domain (operational design domain, ODD), a vehicle status, an occupant status, and the like, applicable to function running of the autonomous driving technologies. The ODC of an autonomous driving vehicle is closely related to safe running of the vehicle. When the ODC of the autonomous driving vehicle exceeds a running boundary, safety of the autonomous driving vehicle may be threatened.

However, in a current technical background, reliability of an ODC monitoring result of the autonomous driving vehicle is insufficient.

### SUMMARY

This application provides a monitoring method, apparatus, and system, to improve reliability of an ODC monitoring result of an autonomous driving device.

According to a first aspect, a monitoring method is provided. The method may be performed by a roadside device, or may be performed by a chip or a circuit used in a roadside device. This is not specifically limited in this application.

The roadside device in this application is a device that may be configured to collect road environment information, and may include a roadside device (road side unit, RSU) in a narrow sense; or may include a handheld terminal device, where the handheld terminal device may collect road environment information in response to input of a user; or may include a device, in another form, configured to collect road environment information.

The vehicle in this application is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

The method includes: determining ODC information of a first area, where the ODC information indicates an ODC object and a status of the ODC object; obtaining a preset ODC element of a vehicle; and determining, based on the ODC information of the first area and the preset ODC element, whether an ODC of the vehicle exceeds a running boundary.

It may be understood that the roadside device is a device associated with the first area. For example, the roadside device is configured to communicate with a vehicle running in the first area, and/or the roadside device is configured to detect environment information of the first area.

For example, the ODC information of the first area may be determined based on ODC information collected by the roadside device.

The vehicle is limited to the preset ODC element of the vehicle, and may not be able to recognize an ODC object other than the preset ODC element, or cannot fully define an ODC object other than the preset ODC element. Therefore, reliability of a result of determining, by the vehicle based on data collected by the vehicle, whether the ODC of the vehicle exceeds the running boundary is insufficient.

In the foregoing technical solution, the roadside device may determine, based on the ODC information of the first area, whether the ODC of the vehicle exceeds the running boundary. This helps improve reliability of a result of determining whether the ODC of the vehicle exceeds the running boundary, to help ensure vehicle safety. In addition, an ODC object or a status of an ODC object that makes the ODC of the vehicle exceed the running boundary can be further determined, to help assist the vehicle in updating the preset ODC element.

It should be noted that the preset ODC element may indicate an ODC object and a status of the ODC object that need to be recognized when an autonomous driving function of the vehicle is run; or the preset ODC element may indicate an ODC object and a status of the ODC object that are forbidden to appear when an autonomous driving function of the vehicle is run.

For example, the autonomous driving function may include but is not limited to: adaptive cruising, automatic emergency braking, automatic parking, blind spot monitoring, traffic warning/braking at front crossroads, traffic waming/braking at rear crossroads, front vehicle collision warning, lane deviation warning, lane keeping assistance, rear vehicle collision warning, traffic sign recognition, traffic jam assistance, highway assistance, and the like.

For example, the preset ODC element may include an ODC element defined by the vehicle, for example, an ODC list declared by the vehicle, or may be information in another form.

With reference to the first aspect, in some implementations of the first aspect, the method further includes: obtaining ODC information determined by the vehicle; and the determining ODC information of a first area includes: determining the ODC information of the first area based on the ODC information determined by the vehicle and ODC information collected by the roadside device.

For example, the ODC information determined by the vehicle may include ODC information collected by the vehicle; or the ODC information determined by the vehicle may include ODC information that is associated with the vehicle and the first area and that is generated by the vehicle based on an ODC information reporting request. For example, the ODC information may indicate an ODC object or a status of an ODC object that is forbidden by the vehicle for the first area, or may indicate an ODC object and a status of the ODC object that are recognized by the vehicle in the first area.

In some possible implementations, the ODC information of the first area is determined based on an intersection set of the ODC information determined by the vehicle and the ODC information collected by the roadside device.

For example, the intersection set of the ODC information determined by the vehicle and the ODC information collected by the roadside device indicates that an ODC object and a status of the ODC object that are determined by the vehicle are the same as an ODC object and a status of the ODC object that are collected by the roadside device.

In an example, the ODC information of the first area is a difference set between the ODC information collected by the roadside device and the intersection set.

In still another example, both the difference set between the ODC information collected by the roadside device and the intersection set, and a difference set between the ODC information determined by the vehicle and the intersection set include information about a same ODC object. A status of the ODC object collected by the roadside device may be the same as or different from a status of the ODC object determined by the vehicle. In this case, the ODC information of the first area may be determined based on information about the ODC object with higher confidence.

In the foregoing technical solution, the information collected by the roadside device is compared with the information determined by the vehicle, so that a data amount of the ODC information of the first area can be reduced. This helps improve efficiency of determining whether the ODC exceeds the running boundary.

With reference to the first aspect, in some implementations of the first aspect, the determining whether an ODC of the vehicle exceeds a running boundary includes: when the ODC information collected by the roadside device includes information about a first ODC object, and the ODC information determined by the vehicle does not include information about the first ODC object, determining, based on the information about the first ODC object and the preset ODC element, whether the ODC of the vehicle exceeds the running boundary.

It should be noted that, if the ODC information determined by the vehicle indicates that the first ODC object is forbidden or a status of the first ODC object is forbidden, it is also considered that the ODC information determined by the vehicle includes the information about the first ODC object.

In an example, if the first ODC object is specified in the preset ODC element, and a status of the first ODC object meets a condition that is met by the first ODC object as specified by the preset ODC element, it may be at least determined that the first ODC object does not cause the vehicle ODC to exceed the running boundary.

In still another example, if the first ODC object is not specified in the preset ODC element, or the first ODC object is specified in the preset ODC element, but a status of the first ODC object does not meet a condition that is met by the first ODC object as specified by the preset ODC element, it may be determined that the ODC of the vehicle exceeds the running boundary, and the first ODC object is one of ODC objects that are not collected by the vehicle.

In the foregoing technical solution, ODC information that is not detected by the vehicle is used as a part of the ODC information of the first area, to determine whether the ODC of the vehicle exceeds the running boundary. This helps further improve reliability of a vehicle ODC monitoring result (namely, a result of whether the ODC of the vehicle exceeds the running boundary).

With reference to the first aspect, in some implementations of the first aspect, the determining ODC information of a first area includes: when both the ODC information collected by the roadside device and the ODC information determined by the vehicle include information about a second ODC object, determining, based on the information about the second ODC object with higher data freshness and/or higher confidence, the ODC information of the first area.

It may be understood that the information about the second ODC object includes a status of the second ODC object.

It may be understood that, the data freshness indicates a moment at which the ODC information is collected, and a closer moment at which the ODC information is collected to a current moment indicates higher data freshness.

In the foregoing technical solution, when both the vehicle and the roadside device collect an ODC object, the ODC information of the first area is determined based on the information about the ODC object with higher data freshness and/or higher confidence. This improves efficiency of determining a monitoring result, and can improve reliability of an ODC monitoring result.

With reference to the first aspect, in some implementations of the first aspect, the method further includes: sending an ODC information reporting request to the vehicle, where the ODC information reporting request is used to request the ODC information determined by the vehicle.

In the foregoing technical solution, the vehicle does not need to actively report the ODC information determined by the vehicle. This helps reduce signaling overheads in an ODC monitoring process.

With reference to the first aspect, in some implementations of the first aspect, the method further includes: generating the ODC information reporting request based on the ODC information collected by the roadside device, where the ODC information reporting request includes an information identifier field and a reporting requirement field, the information identifier field indicates an ODC object that needs to be reported by the vehicle, and the reporting requirement field indicates a condition that needs to be met by the ODC object reported by the vehicle.

For example, the ODC object that needs to be reported by the vehicle includes an ODC object indicated by the ODC information collected by the roadside device.

For example, the condition that needs to be met by the indicated ODC object reported by the vehicle may include: a current status of the indicated ODC object reported by the vehicle (for example, information about the ODC object collected by the vehicle).

In the foregoing technical solution, the information about the ODC object collected by the vehicle is obtained from the vehicle based on ODC object-related information collected by the roadside device; or whether the vehicle presets ODC object-related information (for example, a condition that needs to be met) is obtained based on the ODC object-related information collected by the roadside device. This helps improve efficiency of determining, by the roadside device, the ODC information of the first area, to improve efficiency of determining, by the roadside device, whether the ODC of the vehicle exceeds the running boundary.

With reference to the first aspect, in some implementations of the first aspect, the method further includes: obtaining autonomous driving information of the vehicle, where the autonomous driving information indicates an autonomous driving function enabled by the vehicle; and the determining whether an ODC of the vehicle exceeds a running boundary includes: when the autonomous driving function enabled by the vehicle is a first autonomous driving function, determining whether the ODC of the vehicle exceeds the running boundary.

In some possible implementations, the vehicle may have two modes: a human driving mode and an autonomous driving mode. In the human driving mode, the vehicle may disable all autonomous driving functions. In this case, ODC monitoring may not need to be performed.

In some possible implementations, in the autonomous driving mode, the vehicle may enable one or more autonomous driving functions; or in the human driving mode, the vehicle may enable some autonomous driving functions.

In the foregoing technical solution, ODC monitoring is performed when the vehicle runs the autonomous driving function. This helps reduce energy consumption of the vehicle and improve safety when the vehicle runs the autonomous driving function.

With reference to the first aspect, in some implementations of the first aspect, the determining whether an ODC of the vehicle exceeds a running boundary includes: determining, based on the first autonomous driving function and the preset ODC element, an ODC element subset corresponding to the first autonomous driving function; and determining, based on the ODC information of the first area and the ODC element subset, whether the ODC of the vehicle exceeds the running boundary.

It should be noted that the ODC element subset corresponding to the first autonomous driving function may include: an ODC object that enables the first autonomous driving function to operate normally, and a condition that needs to be met by the ODC object.

In the foregoing technical solution, different autonomous driving functions correspond to different preset ODC elements. In this case, some preset ODC elements are selected based on an autonomous driving function enabled by the vehicle, so that a data amount can be reduced. This helps improve efficiency of determining whether the ODC of the vehicle exceeds the running boundary.

With reference to the first aspect, in some implementations of the first aspect, the method further includes: when the ODC of the vehicle exceeds the running boundary, performing at least one of the following: saving indication information; sending the indication information to the vehicle; or sending the indication information to a cloud server, where the indication information indicates at least one of the following: the ODC of the vehicle exceeding the running boundary, or an ODC object and/or a status of an ODC object that are/is not collected by the vehicle.

In the foregoing technical solution, when the ODC of the vehicle exceeds the running boundary, the indication information is directly sent to the vehicle. This helps the vehicle disable a related autonomous driving function based on the indication information, to improve safety of the vehicle and the user. The roadside device stores the indication information, or sends the indication information to the cloud server. This helps a related person update the preset ODC element of the vehicle based on the indication information, to improve vehicle safety.

With reference to the first aspect, in some implementations of the first aspect, the method further includes: receiving an identity of the vehicle; and the obtaining a preset ODC element of a vehicle includes: obtaining the preset ODC element from the cloud server based on the identity.

For example, the roadside device sends the identity of the vehicle to the cloud server, so that the cloud server determines the preset ODC element of the vehicle based on the identity, and sends the preset ODC element to the roadside device.

In the foregoing technical solution, the roadside device does not need to store the preset ODC element of the vehicle. This helps save storage space of the roadside device.

With reference to the first aspect, in some implementations of the first aspect, the determining whether an ODC of the vehicle exceeds a running boundary includes: sending the ODC information of the first area to the cloud server; receiving first information determined by the cloud server based on the ODC information of the first area and the preset ODC element, where the first information indicates whether the ODC of the vehicle exceeds the running boundary; and determining, based on the first information, whether the ODC of the vehicle exceeds the running boundary.

In the foregoing technical solution, the step of determining, based on the ODC information of the first area and the preset ODC element of the vehicle, whether the ODC of the vehicle exceeds the running boundary is performed by the cloud server. This helps reduce calculation complexity of the roadside device.

According to a second aspect, a monitoring method is provided. The method may be performed by a vehicle, or may be performed by a chip or a circuit used in a vehicle. This is not specifically limited in this application.

The method includes: receiving an ODC information reporting request sent by a roadside device; and sending, based on the ODC information reporting request, ODC information determined by the vehicle, where the ODC information determined by the vehicle is used to determine ODC information of a first area, and the ODC information of the first area is used to determine whether an ODC of the vehicle exceeds a running boundary.

In the foregoing technical solution, the vehicle sends the ODC information based on the ODC information reporting request, so that a data amount of the ODC information of the first area can be reduced. This helps improve efficiency of determining whether the ODC exceeds the running boundary. In addition, this helps improve reliability of a vehicle ODC monitoring result.

With reference to the second aspect, in some implementations of the second aspect, the method further includes: sending autonomous driving information to the roadside device, where the autonomous driving information indicates an autonomous driving function enabled by the vehicle, and the autonomous driving information is used to determine whether the ODC of the vehicle exceeds the running boundary.

In some possible implementations, the autonomous driving information may alternatively be sent in response to the ODC information reporting request. For example, the autonomous driving information and the ODC information determined by the vehicle are sent by using a same data packet, or may be sent by using different data packets.

In the foregoing technical solution, the autonomous driving information of the vehicle is sent to the roadside device, so that the roadside device or the cloud server first pre-selects some preset ODC elements based on the autonomous driving function enabled by the vehicle, to reduce a data amount. This helps improve efficiency of determining whether the ODC of the vehicle exceeds the running boundary.

With reference to the second aspect, in some implementations of the second aspect, the method further includes: sending an identity to the roadside device, where the identity is used to obtain a preset ODC element of the vehicle.

With reference to the second aspect, in some implementations of the second aspect, the method further includes: receiving indication information, where the indication information indicates at least one of the following: the ODC of the vehicle exceeding the running boundary, or an ODC object and/or a status of an ODC object that are/is not collected by the vehicle.

In the foregoing technical solution, when the ODC of the vehicle exceeds the running boundary, the vehicle may receive the indication information, to disable a related autonomous driving function based on the indication information. This helps improve safety of the vehicle and a user.

According to a third aspect, a monitoring apparatus is provided, and the apparatus is disposed on a roadside device, and includes: a first determining unit, configured to determine operational design condition ODC information of a first area, where the ODC information indicates an ODC object and a status of the ODC object; a transceiver unit, configured to obtain a preset ODC element of a vehicle; and a second determining unit, configured to determine, based on the ODC information of the first area and the preset ODC element, whether an ODC of the vehicle exceeds a running boundary.

With reference to the third aspect, in some implementations of the third aspect, the transceiver unit is further configured to: obtain ODC information determined by the vehicle; and the first determining unit is configured to: determine the ODC information of the first area based on the ODC information determined by the vehicle and ODC information collected by the roadside device.

With reference to the third aspect, in some implementations of the third aspect, the second determining unit is configured to: when the ODC information collected by the roadside device includes information about a first ODC object, and the ODC information determined by the vehicle does not include information about the first ODC object, determine, based on the information about the first ODC object and the preset ODC element, whether the ODC of the vehicle exceeds the running boundary.

With reference to the third aspect, in some implementations of the third aspect, the first determining unit is configured to: when both the ODC information collected by the roadside device and the ODC information determined by the vehicle include information about a second ODC object, determine, based on the information about the second ODC object with higher data freshness and/or higher confidence, the ODC information of the first area.

With reference to the third aspect, in some implementations of the third aspect, the transceiver unit is further configured to: send an ODC information reporting request to the vehicle, where the ODC information reporting request is used to request the ODC information determined by the vehicle.

With reference to the third aspect, in some implementations of the third aspect, the apparatus further includes a generation unit, configured to: generate the ODC information reporting request based on the ODC information collected by the roadside device, where the ODC information reporting request includes an information identifier field and a reporting requirement field, the information identifier field indicates an ODC object that needs to be reported by the vehicle, and the reporting requirement field indicates a condition that needs to be met by the ODC object reported by the vehicle.

With reference to the third aspect, in some implementations of the third aspect, the transceiver unit is further configured to: obtain autonomous driving information of the vehicle, where the autonomous driving information indicates an autonomous driving function enabled by the vehicle; and the second determining unit is configured to: when the autonomous driving function enabled by the vehicle is a first autonomous driving function, determine whether the ODC of the vehicle exceeds the running boundary.

With reference to the third aspect, in some implementations of the third aspect, the second determining unit is configured to: determine, based on the first autonomous driving function and the preset ODC element, an ODC element subset corresponding to the first autonomous driving function; and determine, based on the ODC information of the first area and the ODC element subset, whether the ODC of the vehicle exceeds the running boundary.

With reference to the third aspect, in some implementations of the third aspect, the apparatus further includes a processing unit, configured to: save indication information when the ODC of the vehicle exceeds the running boundary, where the indication information indicates at least one of the following: the ODC of the vehicle exceeding the running boundary, or an ODC object and/or a status of an ODC object that are/is not collected by the vehicle; and the transceiver unit is further configured to: send the indication information to the vehicle; and/or send the indication information to a cloud server.

With reference to the third aspect, in some implementations of the third aspect, the transceiver unit is further configured to: receive an identity of the vehicle; and obtain the preset ODC element from the cloud server based on the identity.

With reference to the third aspect, in some implementations of the third aspect, the transceiver unit is further configured to: send the ODC information of the first area to the cloud server; and receive first information determined by the cloud server based on the ODC information of the first area and the preset ODC element, where the first information indicates whether the ODC of the vehicle exceeds the running boundary; and the second determining unit is configured to: determine, based on the first information, whether the ODC of the vehicle exceeds the running boundary.

According to a fourth aspect, a monitoring apparatus is provided, and the apparatus is disposed in a vehicle, and includes: a receiving unit, configured to receive an ODC information reporting request sent by a roadside device; and a sending unit, configured to send, based on the ODC information reporting request, ODC information determined by the vehicle, where the ODC information determined by the vehicle is used to determine ODC information of a first area, and the ODC information of the first area is used to determine whether an ODC of the vehicle exceeds a running boundary.

With reference to the fourth aspect, in some implementations of the fourth aspect, the sending unit is further configured to: send autonomous driving information to the roadside device, where the autonomous driving information indicates an autonomous driving function enabled by the vehicle, and the autonomous driving information is used to determine whether the ODC of the vehicle exceeds the running boundary.

With reference to the fourth aspect, in some implementations of the fourth aspect, the sending unit is further configured to: send an identity to the roadside device, where the identity is used to obtain a preset ODC element of the vehicle.

With reference to the fourth aspect, in some implementations of the fourth aspect, the receiving unit is further configured to: receive indication information, where the indication information indicates at least one of the following: the ODC of the vehicle exceeding the running boundary, or an ODC object and/or a status of an ODC object that are/is not collected by the vehicle.

According to a fifth aspect, a monitoring apparatus is provided, and the apparatus includes: a memory, configured to store a computer program; and a processor, configured to execute the computer program stored in the memory, to enable the apparatus to perform the method in any one of the possible implementations of the first aspect or the second aspect.

According to a sixth aspect, a roadside device is provided, and the roadside device includes the apparatus according to any one of the possible implementations of the third aspect.

According to a seventh aspect, a vehicle is provided, and the vehicle includes the apparatus according to any one of the possible implementations of the fourth aspect.

According to an eighth aspect, a monitoring system is provided, and the system includes the apparatus according to any one of the possible implementations of the third aspect and the apparatus according to any one of the possible implementations of the fourth aspect; or the system includes the roadside device according to any one of the possible implementations of the seventh aspect and the vehicle according to any one of the possible implementations of the eighth aspect.

According to a ninth aspect, a computer program product is provided, and the computer program product includes computer program code. When the computer program code is run on a computer, the computer is enabled to perform the method according to any one of the possible implementations of the first aspect or the second aspect.

It should be noted that all or some of the computer program code may be stored in a first storage medium. The first storage medium may be encapsulated together with a processor, or may be encapsulated separately from a processor.

According to a tenth aspect, a computer-readable medium is provided. The computer-readable medium stores instructions. When the instructions are executed by a processor, the processor is enabled to implement the method according to any one of the possible implementations of the first aspect or the second aspect.

According to an eleventh aspect, a chip is provided. The chip includes a circuit. The circuit is configured to perform the method according to any one of the possible implementations of the first aspect or the second aspect.

### BRIEF DESCRIPTION OF DRAWINGS

FIG. 1 is a functional block diagram of a vehicle according to an embodiment of this application;
FIG. 2 is a block diagram of an architecture of a monitoring system according to an embodiment of this application;
FIG. 3 is a diagram of a monitoring system according to an embodiment of this application;
FIG. 4 is a schematic flowchart of a monitoring method according to an embodiment of this application;
FIG. 5 is a schematic flowchart of another monitoring method according to an embodiment of this application;
FIG. 6 is a schematic flowchart of still another monitoring method according to an embodiment of this application;
FIG. 7 is a schematic flowchart of yet another monitoring method according to an embodiment of this application;
FIG. 8 is a schematic flowchart of still yet another monitoring method according to an embodiment of this application;
FIG. 9 is a block diagram of a monitoring apparatus according to an embodiment of this application;
FIG. 10 is a block diagram of another monitoring apparatus according to an embodiment of this application; and
FIG. 11 is a block diagram of still another monitoring apparatus according to an embodiment of this application.

### DESCRIPTION OF EMBODIMENTS

In the descriptions of embodiments of this application, "/" means "or" unless otherwise specified. For example, A/B may represent A or B. In this specification, "and/or" describes an association relationship between associated objects and represents that three relationships may exist. For example, A and/or B may represent the following three cases. Only A exists, both A and B exist, and only B exists. In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

As described above, in autonomous driving technologies, an ODC specifies various conditions applicable to function running of the autonomous driving technologies. However, when a vehicle runs an autonomous driving function, some scenarios or elements in a running scenario may not meet a preset ODC element of the vehicle. In other words, the vehicle may ignore the foregoing scenarios or elements when performing autonomous driving planning, causing a danger to the vehicle.

In view of this, embodiments of this application provide a monitoring method, apparatus, and system, to monitor whether an ODC of a vehicle exceeds a running boundary when the vehicle runs an autonomous driving function. Further, when it is determined that the ODC of the vehicle exceeds the running boundary, the information is fed back to the vehicle, to ensure driving safety.

To facilitate understanding of the solutions in embodiments of this application, concepts in this application are first described.
1. ODD: is an external environment condition that is determined during design of a driving automation system and that is applicable to function running of the driving automation system.
2. ODC: is a general term for various conditions that are determined during design of a driving automation system and that are applicable to function running of the driving automation system, and includes an ODD, a vehicle status, an occupant status, and another necessary condition.
3. Driving automation function: is a capability of a driving automation system to execute some or all dynamic driving tasks under a specific operational design condition. One driving automation system may implement one or more driving automation functions, and each function is associated with a specific driving automation level and an operational design condition.
4. ODC object: is an object, a scenario, or the like that may affect running of a driving automation function of a vehicle.
5. ODC list declared by a vehicle: includes one or more ODC elements, and each ODC element indicates one ODC object and a condition that needs to be met by the ODC object.
6. Preset ODC element: defines an ODC object required for implementing a driving automation function of a vehicle and a condition that needs to be met by the ODC object, including but not limited to an ODC element name, a requirement of the ODC element, and an association relationship between the ODC element and another ODC element. The ODC element name indicates an ODC object, and the requirement of the ODC element and the association relationship between the ODC element and the another ODC element may indicate a condition that needs to be met by the ODC object. The condition that needs to be met by the ODC object may include: a status of the ODC object that needs to be recognized by the vehicle, or an ODC object or a status of an ODC object that is forbidden to appear. A specific form of the preset ODC element may be an ODC list declared by the vehicle, or may be another form.

In embodiments of this application, the driving automation system is also referred to as an automated driving system, and the driving automation function is also referred to as an autonomous driving function.

7. An ODC exceeds a running boundary: An ODC object that appears in a vehicle running scenario is not included in a preset ODC element, or a status of an ODC object that appears in a running scenario does not meet a requirement of a preset ODC element, and consequently, the vehicle cannot implement an autonomous driving function, or safety of the vehicle in a process of implementing an autonomous driving function is threatened.

The following describes technical solutions of embodiments in this application with reference to accompanying drawings.

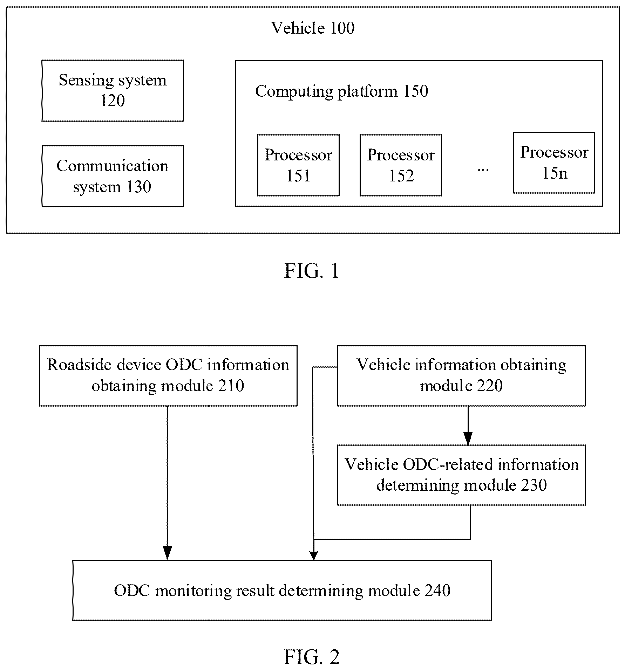

FIG. 1 is a functional block diagram of a vehicle 100 according to an embodiment of this application. The vehicle 100 may include a sensing system 120, a communication system 130, and a computing platform 150. The sensing system 120 may include one or more sensors that sense information about an ambient environment of the vehicle 100. For example, the sensing system 120 may include a positioning system. The positioning system may be a global positioning system (global positioning system, GPS), a BeiDou system or another positioning system, or an inertial measurement unit (inertial measurement unit, IMU). For another example, the sensing system 120 may further include one or more of a lidar, a millimeter-wave radar, an ultrasonic radar, and a photographing apparatus.

The vehicle 100 interacts with a cloud server, a roadside device, another vehicle, and the like by using the communication system 130. The communication system 130 may include a wireless communication system.

For example, the vehicle 100 may communicate with another object by using at least one of a vehicle to everything (vehicle to everything, V2X) communication network, a vehicle to infrastructure (vehicle to infrastructure, V2I) communication network, a vehicle to vehicle (vehicle to vehicle, V2V) communication network, a vehicle to pedestrian (vehicle to pedestrian, V2P) communication network, or a vehicle to network (vehicle to Network, V2N) communication network.

Some or all functions of the vehicle 100 may be controlled by the computing platform 150. The computing platform 150 may include one or more processors, such as processors 151 to 15n (n is a positive integer). The processor is a circuit having an instruction processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital instruction processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The vehicle 100 may include an advanced driving assistant system (advanced driving assistant system, ADAS). The ADAS obtains information around the vehicle by using a plurality of sensors (including but not limited to a lidar, a millimeter-wave radar, a photographing apparatus, an ultrasonic sensor, a global positioning system, and an inertia measurement unit) on the vehicle, and analyzes and processes the obtained information, to implement functions such as obstacle sensing, target recognition, vehicle positioning, path planning, and user monitoring/reminder. This improves safety, automation, and comfort of vehicle driving.

In terms of logical functions, the ADAS system generally includes three main functional modules: a sensing module, a decision-making module, and an execution module. The sensing module senses an ambient environment of a vehicle body by using a sensor, and inputs corresponding real-time data to a processing center at a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision instruction from the decision-making module, the execution module takes a corresponding action, for example, driving, lane change, steering, braking, or warning.

In this embodiment of this application, the sensing system 120 may be configured to collect ODC information. The communication system 130 may be configured to send the ODC information collected by the sensing system to the roadside device or the cloud server, and may be further configured to receive an ODC monitoring result from the roadside device or the cloud server. The computing platform 150 may be configured to control, based on the ODC monitoring result, the vehicle 100 to disable an autonomous driving function, or keep the autonomous driving function enabled.

FIG. 2 is a block diagram of a monitoring system according to an embodiment of this application. As shown in FIG. 2, the system includes a road ODC information obtaining module 210, a vehicle information obtaining module 220, a vehicle ODC-related information determining module 230, and an ODC monitoring result determining module 240. The road ODC information obtaining module 210 may include one or more sensors of a (roadside unit, RSU). The vehicle information obtaining module 220, the vehicle ODC-related information determining module 230, and the ODC monitoring result determining module 240 may include one or more processors in the RSU, or may include one or more processors in the cloud server.

The road ODC information obtaining module 210 is configured to obtain ODC information collected by the RSU, and the ODC information includes an ODC object and a status of the ODC object in an area 1 that are collected by the RSU.

The vehicle information obtaining module 220 is configured to: obtain at least one piece of information of an identity of the vehicle running in the area 1 and an autonomous driving function of the vehicle, and transfer the foregoing information to the vehicle ODC-related information determining module 230; or the vehicle information obtaining module 220 may be further configured to: obtain, from the vehicle, ODC information determined by the vehicle, and/or obtain, from the cloud server, a preset ODC element of the vehicle, and transfer the foregoing information to the ODC monitoring result determining module 240.

The vehicle ODC-related information determining module 230 may select, from the preset ODC element of the vehicle based on the autonomous driving function of the vehicle, an ODC element subset corresponding to the run autonomous driving function, or the vehicle ODC-related information determining module 230 may further determine the preset ODC element of the vehicle based on the identity of the vehicle, and send the ODC element subset or the preset ODC element to the ODC monitoring result determining module 240.

The ODC monitoring result determining module 240 is configured to determine, based on the ODC information collected by the RSU and the preset ODC element (or the ODC element subset) of the vehicle, whether an ODC of the vehicle exceeds a running boundary when the vehicle runs in the area 1. Alternatively, the ODC monitoring result determining module 240 may further perform selection based on the ODC information collected by the RSU and the ODC information determined by the vehicle, to determine ODC information of the area 1, to determine, based on the ODC information of the area 1 and the preset ODC element (or the ODC element subset) of the vehicle, whether an ODC of the vehicle exceeds a running boundary.

It should be understood that the foregoing modules are merely examples. In actual application, the foregoing modules may be added or deleted based on an actual requirement. For example, in the system architecture shown in FIG. 2, the vehicle information obtaining module 220 and the vehicle ODC-related information determining module 230 may be combined into one module.

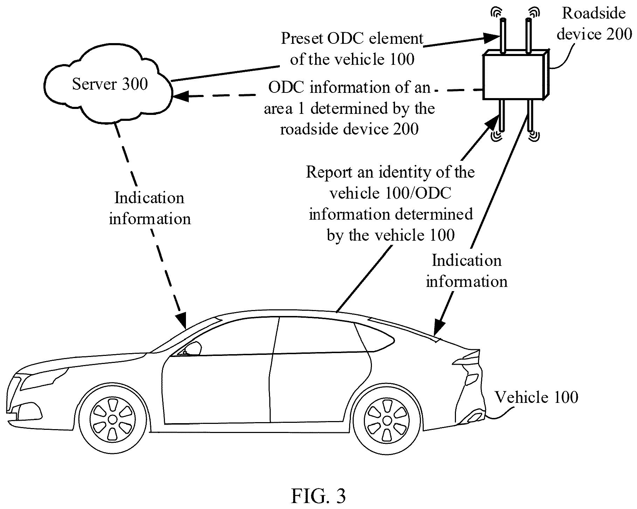

FIG. 3 is a diagram of a monitoring system according to an embodiment of this application. As shown in FIG. 3, the system includes the vehicle 100, a roadside device 200, and a server 300. The roadside device 200 is associated with the area 1. When running in the area 1, the vehicle 100 may communicate with the roadside device 200.

In an example, the vehicle 100 reports the identity of the vehicle to the roadside device 200. The roadside device 200 sends the identity of the vehicle 100 to the server 300. The server 300 determines the preset ODC element (for example, an ODC list declared by the vehicle 100) of the vehicle 100 based on the identity of the vehicle 100, and sends the preset ODC element to the roadside device 200. The roadside device 200 determines ODC information of the area 1, and determines, based on the preset ODC element of the vehicle 100 and the ODC information of the area 1, whether an ODC of the vehicle 100 exceeds a running boundary.

In still another example, the vehicle 100 reports the identity of the vehicle to the roadside device 200. The roadside device 200 sends the identity of the vehicle 100 to the server 300, and the server 300 determines the preset ODC element of the vehicle 100 based on the identity of the vehicle 100. In addition, the roadside device 200 sends the ODC information of the area 1 determined by the roadside device to the server 300, so that the server 300 determines, based on the preset ODC element of the vehicle 100 and the ODC information of the area 1, whether the ODC of the vehicle 100 exceeds the running boundary.

In still another example, the vehicle 100 may further send, to the roadside device 200, ODC information determined by the vehicle 100, so that the roadside device 200 determines the ODC information of the area 1 based on the information.

In some possible implementations, when determining that the ODC of the vehicle 100 exceeds the running boundary, the roadside device 200 or the server 300 sends indication information to the vehicle 100, to indicate, to the vehicle 100, that the ODC of the vehicle exceeds the running boundary, or to indicate, to the vehicle 100, an ODC object and/or a status of an ODC object that are/is not collected by the vehicle.

For example, the monitoring system shown in FIG. 2 may be disposed in the roadside device 200 shown in FIG. 3, or may be disposed in the server 300 shown in FIG. 3.

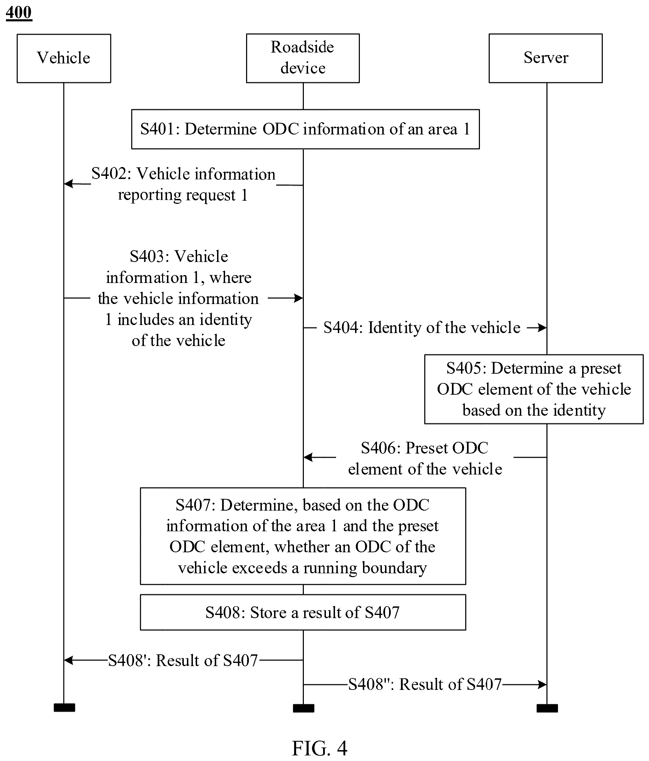

FIG. 4 is a schematic flowchart of a monitoring method according to an embodiment of this application. The method may be performed by the system shown in FIG. 2, or may be performed by the system shown in FIG. 3. For example, a vehicle may be an example of the vehicle 100, a roadside device may be an example of the roadside device 200, a server may be an example of the server 300, and the method 400 may include the following steps.

S401: The roadside device determines ODC information of an area 1.

For example, the roadside device may determine the ODC information of the area 1 based on ODC information collected by the roadside device; or the roadside device may determine the ODC information of the area 1 based on ODC information collected by the roadside device and ODC information that is determined by the vehicle and that is sent by the vehicle.

In some possible implementations, before determining the ODC information of the area 1, the roadside device receives the ODC information that is determined by the vehicle and that is sent by the vehicle. For example, the ODC information determined by the vehicle may include ODC information collected by the vehicle, for example, an ODC object and a status of the ODC object in the area 1 that are collected by the vehicle; or the ODC information determined by the vehicle may include an ODC object that can be recognized by the vehicle and that is reported by the vehicle and a condition that needs to be met by the ODC object.

For example, the ODC information collected by the vehicle may be collected by using a sensing system of the vehicle.

For example, ODC information that is determined by the vehicle and that is periodically sent by the vehicle is received; or the roadside device sends an ODC information reporting request to the vehicle, and receives ODC information that is determined by the vehicle and that is sent by the vehicle in response to the ODC information reporting request.

For example, the ODC information collected by the roadside device may include ODC information collected by a sensing system of the roadside device, or the ODC information collected by the roadside device may include ODC information manually entered.

In some possible implementations, the ODC information of the area 1 further includes time identification information 1, and the time identification information 1 indicates a moment at which the roadside device collects the ODC information.

S402: The roadside device sends a vehicle information reporting request 1 to the vehicle.

In some possible implementations, the vehicle information reporting request 1 is used to request the vehicle to report identity information of the vehicle. Alternatively, the vehicle information reporting request 1 is further used to request the vehicle to report autonomous driving information of the vehicle, for example, whether the vehicle enables an autonomous driving function, or information about an autonomous driving function currently run by the vehicle.

S403: The vehicle sends vehicle information 1 to the roadside device based on the vehicle information reporting request 1, where the vehicle information 1 includes an identity of the vehicle.

For example, the identity may include at least one of the following: a vehicle identification number (vehicle identification number, VIN), a vehicle model, a license plate number, and electronic registration identification of the vehicle (electronic registration identification of the motor vehicle, ERI).

In some possible implementations, the vehicle information 1 further includes the autonomous driving information of the vehicle.

In some possible implementations, the vehicle information 1 further includes time identification information 2, and the time identification information 2 indicates a moment at which the vehicle sends the vehicle information 1.

S404: The roadside device sends the identity of the vehicle to the server.

S405: The server determines a preset ODC element of the vehicle based on the identity of the vehicle.

For example, the server queries the preset ODC element of the vehicle based on the identity of the vehicle. The preset ODC element may include one or more ODC element subsets, and each ODC element subset defines a running condition of an autonomous driving function supported by the vehicle.

S406: The server sends the preset ODC element of the vehicle to the roadside device.

S407: The roadside device determines, based on the ODC information of the area 1 and the preset ODC element, whether an ODC of the vehicle exceeds a running boundary.

In some possible implementations, the preset ODC element defines an ODC object and a condition that needs to be met by the ODC object. In this case, the roadside device may first determine whether an ODC object indicated by the ODC information of the area 1 is included in the ODC object defined by the preset ODC element. If the ODC object indicated by the ODC information of the area 1 is not included in the ODC object defined by the preset ODC element, the roadside device determines that the ODC of the vehicle exceeds the running boundary. If the ODC object indicated by the ODC information of the area 1 is included in the ODC object defined by the preset ODC element, the roadside device may further determine whether a status of the ODC object indicated by the ODC information of the area 1 meets a condition that needs to be met by the ODC object defined by the preset ODC element. If the status of the ODC object indicated by the ODC information of the area 1 meets the condition that needs to be met by the ODC object defined by the preset ODC element, the roadside device determines that the ODC of the vehicle does not exceed the running boundary. If the status of the ODC object indicated by the ODC information of the area 1 does not meet the condition that needs to be met by the ODC object defined by the preset ODC element, the roadside device determines that the ODC of the vehicle exceeds the running boundary.

In an example, the preset ODC element of the vehicle defines the following ODC objects and conditions that need to be met by the ODC objects. The ODC objects include a road surface material, road surface quality, a target object, and weather. The conditions that need to be met by the ODC objects include: a road surface material status: a pavement allowed state; a road surface quality status: cracking is allowed; a target object status: a motor vehicle and a pedestrian are allowed; and a weather status: recognition of level-2 or above rainfall is allowed. The ODC information of the area 1 includes: The road surface material (the ODC object) is in the paved state (a status of the ODC object), the road surface is cracked (the ODC object is the road surface quality, and a status of the ODC object is "cracked"), the target object (the ODC object) includes a pedestrian and a motor vehicle (a status of the ODC object), and a temporary sign (the ODC object is a traffic sign, and a status of the ODC object is the temporary sign). It can be learned that, if the temporary sign is not defined in the preset ODC element, it may be determined that the ODC of the vehicle exceeds the running boundary.

In another example, the preset ODC element of the vehicle defines the following: the condition that needs to be met by "weather" is "recognition of level-2 or above rainfall", and the ODC information of the area 1 includes "weather: level-1 rainfall". In other words, the ODC object "weather" is defined in the preset ODC element of the vehicle, but in the ODC information of the area 1, a status of "weather" does not comply with a definition of the preset ODC element of the vehicle. Therefore, it is determined that the ODC of the vehicle exceeds the running boundary.

In some possible implementations, the roadside device determines, based on the preset ODC element, the ODC information of the area 1, and the autonomous driving function run by the vehicle, whether the ODC of the vehicle exceeds the running boundary.

For example, the vehicle supports a plurality of autonomous driving functions, and a currently run autonomous driving function is a function run on a highway. The preset ODC element defines the following ODC objects: a road surface material, road surface quality, a target object, weather, a quantity of lanes, and a target object, and conditions that need to be met by the ODC objects. An ODC element subset that is in the preset ODC element and that is corresponding to the "function run on a highway" includes the following ODC objects and conditions that need to be met: a quantity of lanes, and a status of the quantity of lanes: the quantity of lanes allows 2 to 5 lanes; and a target object, and a target object status: a motor vehicle is allowed, and a pedestrian is not allowed. The ODC information of the area 1 includes: the quantity of lanes (the ODC object) is 4 (a status of the ODC object), and the target object (the ODC object) includes a pedestrian and a motor vehicle (a status of the ODC object). It can be learned that the status of the target object (the ODC object) in the ODC information of the area 1 does not comply with the condition that needs to be met by the ODC object and that is defined by the preset ODC element. Therefore, it may be determined that the ODC of the vehicle exceeds the running boundary.

For example, the roadside device may alternatively select an ODC information subset from the ODC information of the area 1 based on the autonomous driving function run by the vehicle. The ODC information subset indicates an ODC object corresponding to the autonomous driving function and a status of the ODC object. Further, the roadside device selects, from the preset ODC element, an ODC element subset corresponding to the autonomous driving function, to compare the ODC information subset with the ODC element subset, to determine whether the ODC of the vehicle exceeds the running boundary.

S408: The roadside device stores a result of S407.

In some possible implementations, the roadside device stores a result that the ODC of the vehicle does not exceed the running boundary, or stores a result that the ODC of the vehicle exceeds the running boundary.

In some possible implementations, the roadside device stores information about an ODC object that is collected by the roadside device but is not included in the preset ODC element.

S408': The roadside device sends a result of S407 to the vehicle.

For example, the roadside device may send, to the vehicle, a result of whether the ODC of the vehicle exceeds the running boundary; or the roadside device may further send, to the vehicle, information about an ODC object that is collected by the roadside device but is not included in the preset ODC element.

S408": The roadside device sends a result of S407 to the server.

For example, the roadside device may send, to the server, a result of whether the ODC of the vehicle exceeds the running boundary; or the roadside device may further send, to the server, information about an ODC object that is collected by the roadside device but is not included in the preset ODC element.

In some possible implementations, not all operations in FIG. 4 need to be performed. For example, one or more of S408, S408', and S408" may be performed. In addition, the operations shown in FIG. 4 may not be performed in a sequence shown in the figure. For example, S402 and S403 may be performed before S401.

According to the monitoring method provided in this embodiment of this application, the roadside device may determine, based on the ODC information of the area 1, whether the ODC of the vehicle exceeds the running boundary. This helps improve reliability of a result of determining whether the ODC of the vehicle exceeds the running boundary, to help ensure vehicle safety. In addition, the ODC object or a status of the ODC object that makes the ODC of the vehicle exceed the running boundary can be further determined, to help assist the vehicle in updating the preset ODC element.

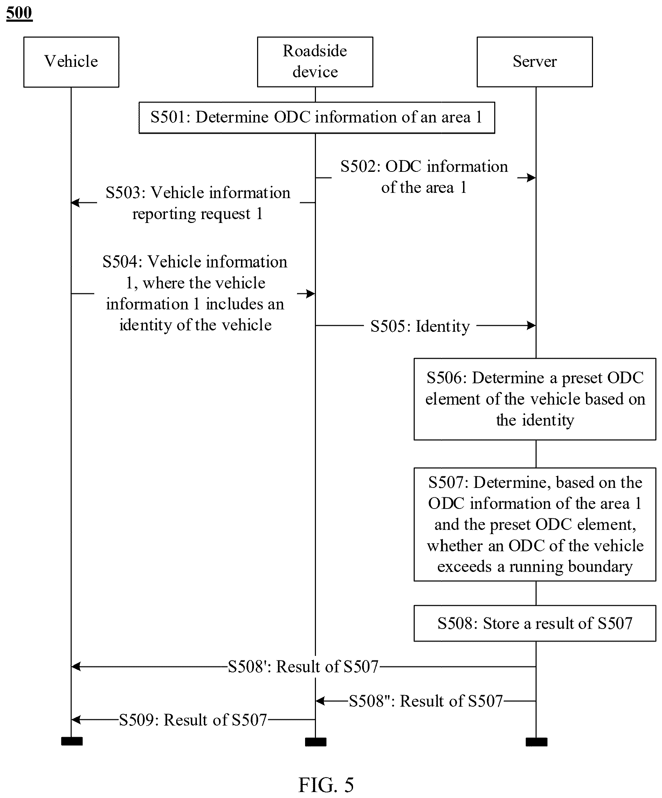

FIG. 5 is a schematic flowchart of another monitoring method according to an embodiment of this application. The method may be performed by the system shown in FIG. 2, or may be performed by the system shown in FIG. 3. For example, the method 500 may include S501 to S509.

For step S501, refer to the description in S401. For S503 to S506, refer to the description in S402 to S405. The method 500 is different from the method 400 in that the step of determining whether the vehicle exceeds the running boundary is performed by the server (S507). Therefore, before S507 is performed, the server needs to obtain the ODC information of the area 1 from the roadside device (S502). Further, after determining that the ODC of the vehicle exceeds the running boundary or does not exceed the running boundary, the server may store the monitoring result (S508), or may send the monitoring result to the roadside device (S508"), and/or send the result to the vehicle (for example, the result is directly sent to the vehicle in S508', or the result is sent to the vehicle by using the roadside device in S509).

For example, for a specific method for determining, by the server, whether the ODC of the vehicle exceeds the running boundary, refer to the description in S407. Details are not described herein again.

According to the monitoring method provided in this embodiment of this application, the cloud server determines, based on the ODC information of the area 1, whether the ODC of the vehicle exceeds the running boundary. This helps improve reliability of a result of determining whether the ODC of the vehicle exceeds the running boundary, to help ensure vehicle safety, and helps reduce calculation complexity of the roadside device.

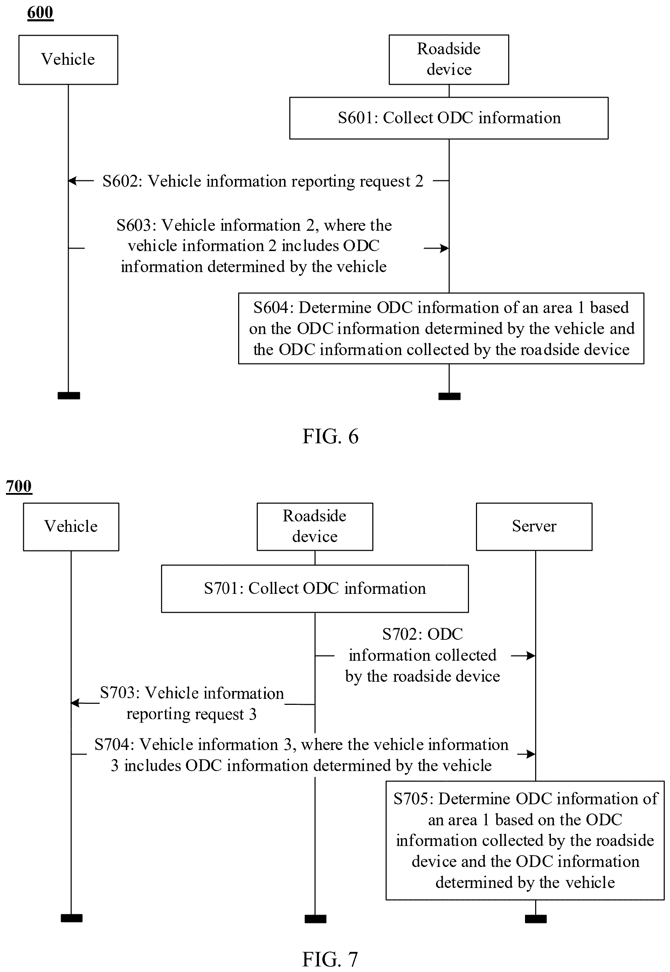

FIG. 6 is still another schematic flowchart of a monitoring method according to an embodiment of this application. The method may be performed by the system shown in FIG. 2, or may be performed by the system shown in FIG. 3. For example, the method 600 may be understood as an extension of the method 400 or the method 500. For example, the method 600 may be performed before S401 or S501, and the method 600 may include the following steps.

S601: The roadside device collects ODC information.

For example, the roadside device collects ODC information of an area 1.

S602: The roadside device sends a vehicle information reporting request 2 to the vehicle.

In an example, the vehicle information reporting request 2 may be used to request the vehicle to send ODC information collected by the vehicle to the roadside device.

In another example, the vehicle information reporting request 2 may be used to request the vehicle to send information about a specific ODC object, for example, a condition that needs to be met by the specific ODC object. For example, the vehicle information reporting request may include an information identifier field and a reporting requirement field. The information identifier field indicates an ODC object that needs to be reported by the vehicle, and the reporting requirement field indicates a condition that needs to be met by the ODC object reported by the vehicle.

In some possible implementations, the specific ODC object may be preset by a system. Alternatively, the vehicle information reporting request 2 is generated based on ODC information collected by the roadside device. For example, if the ODC information collected by the roadside device includes information about an ODC object 1 to an ODC object 3, the vehicle information reporting request 2 may be used to request the vehicle to send information about the ODC object 1 to the ODC object 3.

For example, a form of the vehicle information reporting request 2 may be shown in Table 1. "ODC element name" indicates the ODC object that needs to be reported by the vehicle, and "Reporting requirement" and "Association relationship" indicate conditions that need to be met by the ODC object reported by the vehicle. For example, "ODC element name 1" to "ODC element name 3" may be respectively corresponding to the ODC object 1 to the ODC object 3.

**Table 1**

| **ODC element name** | **Reporting requirement** | **Association relationship** |
|---|---|---|
| ODC element name 1 (road surface) | Report the ODC object of a refined level | Area range and time range |
| ODC element name 2 (temporary sign) | Recognized or not | \ |
| ODC element name 3 (driver takeover status) | Can be taken over or not | \ |

For example, the vehicle information reporting request 2 shown in Table 1 is used to request the vehicle to report information about the road surface, the temporary sign, and the driver takeover status. For the "road surface", the vehicle is requested to report an element of the refined level, and report the area range and the time range in which the "road surface" needs to be recognized. For the "temporary sign", the vehicle is requested to report whether the temporary sign is recognized. For the "driver takeover status", the vehicle is requested to report whether the vehicle can be taken over.

For example, "\" indicates that the field is empty. The vehicle may actively report, based on the information that the field is empty, the "association relationship" corresponding to the ODC object, for example, a time limit for a driver to take over the vehicle or a geographical location limit for recognizing the temporary sign. Alternatively, the vehicle may not report, based on the information that the field is empty, the "association relationship" corresponding to the ODC object.

In a specific implementation process, the ODC element name may be a number or other code, and a correspondence between a number or other code and an ODC object is preset, so that the vehicle can determine, based on a number or other code, information about an ODC object that needs to be reported.

In some possible implementations, the vehicle information reporting request 2 and the vehicle information reporting request 1 are sent at the same time, for example, sent by using a same packet, or sent by using different packets.

S603: The vehicle sends vehicle information 2 to the roadside device based on the vehicle information reporting request 2, where the vehicle information 2 includes ODC information determined by the vehicle.

For example, the ODC information determined by the vehicle may be ODC information collected by the vehicle in the area 1.

For example, the ODC information determined by the vehicle may be a list generated based on the vehicle reporting request 2. For example, a form of the ODC information that is determined by the vehicle and that is generated based on the vehicle information reporting request 2 shown in Table 1 may be shown in Table 2.

**Table 2**

| **ODC element name** | **Reporting requirement** | **Association relationship** |
|---|---|---|
| ODC element name 1 (road surface) | Road surface material: paved | Area range: urban areas |
| | Road surface quality: cracked | Time range: 19:00 to 06:00 of a next day |
| | Road surface cover: none | |
| ODC element name 2 (temporary sign) | Recognized | Road type: rural road |
| ODC element name 3 (driver takeover status) | Can be taken over | \ |

For example, in the ODC information determined by the vehicle shown in Table 2, for the "road surface", the ODC information determined by the vehicle includes a more refined ODC object and status of the ODC object, including the road surface material, the road surface quality, and the road surface cover; and the area range for recognizing the road surface is the "urban areas", and the time range is "19:00 to 06:00 of a next day". For the "temporary sign", it is fed back in the ODC information determined by the vehicle that the vehicle recognizes the temporary sign when the road type is the "rural road". For the "driver takeover status", the ODC information determined by the vehicle feeds back "Can be taken over".

S604: The roadside device determines the ODC information of the area 1 based on the ODC information determined by the vehicle and the ODC information collected by the roadside device.

In an example, the ODC information of the area 1 includes information about an ODC object that is included in the ODC information collected by the roadside device and that is not included in the ODC information determined by the vehicle.

For example, when the ODC information collected by the roadside device includes the information about the ODC object 1 and the information about the ODC object 2, and the ODC information determined by the vehicle includes the information about the ODC object 2 but does not include the information about the ODC object 1, the determined ODC information of the area 1 includes the information about the ODC object 1, and does not include the information about the ODC object 2.

In still another example, both the ODC information collected by the roadside device and the ODC information determined by the vehicle include the information about the ODC object 3, but statuses of the ODC object 3 indicated by the two pieces of ODC information are different. Alternatively, when the status of the ODC object 3 indicated by the ODC information collected by the roadside device does not meet a condition that is determined by the vehicle and that needs to be met by the ODC object 3 for ODC information reporting, the ODC information of the area 1 is determined based on the information about the ODC object 3 with higher data freshness and/or higher confidence.

For example, the data freshness indicates a moment at which the ODC information is collected, and a closer moment at which the ODC information is collected to a current moment indicates higher data freshness.

For example, confidence of the status of the ODC object 3 may be determined based on historical data of the ODC object 3.

According to the monitoring method provided in this embodiment of this application, ODC information that is not detected by the vehicle can be used as a part of the ODC information of the area 1, to determine whether an ODC of the vehicle exceeds a running boundary. This helps improve efficiency of determining a monitoring result. When both the vehicle and the roadside device collect an ODC object, the ODC information of the area 1 is determined based on information about the ODC object with higher data freshness and/or higher confidence. This improves efficiency of determining a monitoring result, and can improve reliability of the ODC monitoring result.

In some possible implementations, the step of determining the ODC information of the area 1 may alternatively be performed by the server. Specifically, in the method 700 shown in FIG. 7, the method 700 includes S701 to S705.

For example, after collecting the ODC information (S701), the roadside device sends the ODC information collected by the roadside device to the server (S702).

Further, the roadside device sends a vehicle information reporting request 3 to the vehicle, where the request is used to request the vehicle to report vehicle information 3 of the vehicle to the server. For specific implementations of S703 and S704, refer to descriptions in S602 and S603. Details are not described herein again. For example, in S704, the vehicle may send the vehicle information 3 to the server by using the roadside device.

Still further, the server determines the ODC information of the area 1 based on the ODC information determined by the vehicle and the ODC information collected by the roadside device (S705). For a specific method for determining the ODC information of the area 1 by the server, refer to the description in S704. Details are not described herein again.

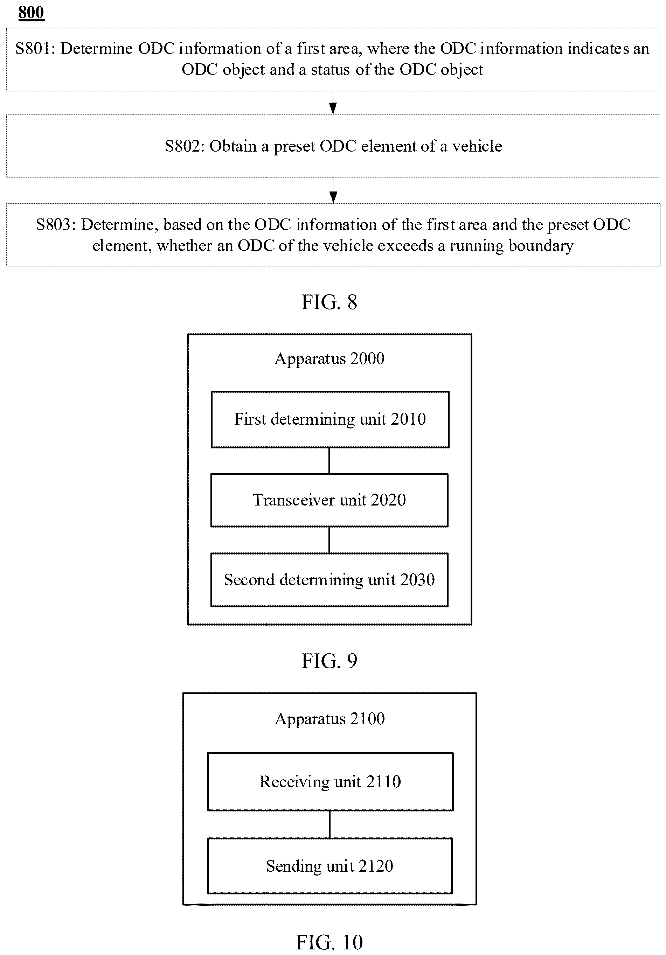

FIG. 8 is yet another schematic flowchart of a monitoring method according to an embodiment of this application. The method may be performed by the system shown in FIG. 2, or may be performed by the roadside device in the system shown in FIG. 3. For example, the method 800 may include the following steps.

S801: Determine ODC information of a first area, where the ODC information indicates an ODC object and a status of the ODC object.

For example, the first area includes the area 1 in the foregoing embodiments.

For example, for a specific method for determining the ODC information of the first area, refer to the description in the foregoing embodiments. Details are not described herein again.

S802: Obtain a preset ODC element of the vehicle.

For example, the vehicle may include the vehicle in the foregoing embodiments, or may be another vehicle running in the first area.

For example, the preset ODC element may include an ODC list declared by the vehicle, or may include information in another form.

For example, for a specific method for obtaining the preset ODC element of the vehicle, refer to the description in the foregoing embodiments. Details are not described herein again.

S803: Determine, based on the ODC information of the first area and the preset ODC element, whether an ODC of the vehicle exceeds a preset boundary.

For example, for a specific method for determining whether the ODC of the vehicle exceeds the preset boundary, refer to the description in the foregoing embodiments. Details are not described herein again.

In some possible implementations, the roadside device may further perform other steps performed by the roadside device in FIG. 4 to FIG. 7.

According to the monitoring method provided in this embodiment of this application, the roadside device may determine, based on the ODC information of the first area, whether the ODC of the vehicle exceeds the running boundary. This helps improve reliability of a result of determining whether the ODC of the vehicle exceeds the running boundary, to help ensure vehicle safety. In addition, an ODC object or a status of an ODC object that makes the ODC of the vehicle exceed the running boundary can be further determined, to help assist the vehicle in updating the preset ODC element.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing describes in detail the methods provided in embodiments of this application with reference to FIG. 1 to FIG. 8. With reference to FIG. 9 to FIG. 11, the following describes in detail an apparatus provided in embodiments of this application. It should be understood that descriptions of the apparatus embodiment correspond to the descriptions of the method embodiments. Therefore, for content that is not described in detail, refer to the method embodiments. For brevity, details are not described herein again.

FIG. 9 is a block diagram of a monitoring apparatus 2000 according to an embodiment of this application. The apparatus 2000 includes a first determining unit 2010, a transceiver unit 2020, and a second determining unit 2030.

The apparatus 2000 may include units configured to perform the methods in FIG. 4 to FIG. 8. In addition, the units in the apparatus 2000 are separately configured to implement corresponding procedures of the method embodiments in FIG. 4 to FIG. 8.

Specifically, the first determining unit 2010 is configured to determine an operational design condition ODC information of a first area, where the ODC information indicates an ODC object and a status of the ODC object; the transceiver unit 2020 is configured to obtain a preset ODC element of a vehicle; and the second determining unit 2030 is configured to determine, based on the ODC information of the first area and the preset ODC element, whether an ODC of the vehicle exceeds a running boundary.

Optionally, the transceiver unit 2020 is further configured to: obtain ODC information determined by the vehicle; and the first determining unit 2010 is configured to: determine the ODC information of the first area based on the ODC information determined by the vehicle and ODC information collected by the roadside device.

Optionally, the second determining unit 2030 is configured to: when the ODC information collected by the roadside device includes information about a first ODC object, and the ODC information determined by the vehicle does not include information about the first ODC object, determine, based on the information about the first ODC object and the preset ODC element, whether the ODC of the vehicle exceeds the running boundary.

Optionally, the first determining unit 2010 is configured to: when both the ODC information collected by the roadside device and the ODC information determined by the vehicle include information about a second ODC object, determine, based on the information about the second ODC object with higher data freshness and/or higher confidence, the ODC information of the first area.

Optionally, the transceiver unit 2020 is further configured to: send an ODC information reporting request to the vehicle, where the ODC information reporting request is used to request the ODC information determined by the vehicle.

Optionally, the apparatus further includes a generation unit, configured to: generate the ODC information reporting request based on the ODC information collected by the roadside device, where the ODC information reporting request includes an information identifier field and a reporting requirement field, the information identifier field indicates an ODC object that needs to be reported by the vehicle, and the reporting requirement field indicates a condition that needs to be met by the ODC object reported by the vehicle.

Optionally, the transceiver unit 2020 is further configured to: obtain autonomous driving information of the vehicle, where the autonomous driving information indicates an autonomous driving function enabled by the vehicle; and the second determining unit 2030 is configured to: when the autonomous driving function enabled by the vehicle is a first autonomous driving function, determine whether the ODC of the vehicle exceeds the running boundary.

Optionally, the second determining unit 2030 is configured to: determine, based on the first autonomous driving function and the preset ODC element, an ODC element subset corresponding to the first autonomous driving function; and determine, based on the ODC information and the ODC element subset, whether the ODC of the vehicle exceeds the running boundary.

Optionally, the apparatus further includes a processing unit, configured to: save indication information when the ODC of the vehicle exceeds the running boundary, where the indication information indicates at least one of the following: the ODC of the vehicle exceeding the running boundary, or an ODC object and/or a status of an ODC object that are/is not collected by the vehicle; and the transceiver unit 2020 is further configured to: send the indication information to the vehicle; and/or send the indication information to a cloud server.

Optionally, the transceiver unit 2020 is further configured to: receive an identity of the vehicle; and obtain the preset ODC element from the cloud server based on the identity.

Optionally, the transceiver unit 2020 is further configured to: send the ODC information of the first area to the cloud server; and receive first information determined by the cloud server based on the ODC information of the first area and the preset ODC element, where the first information indicates whether the ODC of the vehicle exceeds the running boundary; and the second determining unit 2030 is configured to: determine, based on the first information, whether the ODC of the vehicle exceeds the running boundary.

FIG. 10 is a block diagram of a monitoring apparatus 2100 according to an embodiment of this application. The apparatus 2100 includes a receiving unit 2110 and a sending unit 2120.

The apparatus 2100 may include units configured to perform the methods in FIG. 4 to FIG. 8. In addition, the units in the apparatus 2000 are separately configured to implement corresponding procedures of the method embodiments in FIG. 4 to FIG. 8.

Specifically, the receiving unit 2110 is configured to: receive an ODC information reporting request sent by a roadside device; and the sending unit 2120 is configured to send, based on the ODC information reporting request, ODC information determined by the vehicle, where the ODC information determined by the vehicle is used to determine ODC information of a first area, and the ODC information of the first area is used to determine whether an ODC of the vehicle exceeds a running boundary.

Optionally, the sending unit 2120 is further configured to: send autonomous driving information to the roadside device, where the autonomous driving information indicates an autonomous driving function enabled by the vehicle, and the autonomous driving information is used to determine whether the ODC of the vehicle exceeds the running boundary.

Optionally, the sending unit 2120 is further configured to: send an identity to the roadside device, where the identity is used to obtain a preset ODC element of the vehicle.

Optionally, the receiving unit 2110 is further configured to: receive indication information, where the indication information indicates at least one of the following: the ODC of the vehicle exceeding the running boundary, or an ODC object and/or a status of an ODC object that are/is not collected by the vehicle.

For example, the first determining unit 2010, the transceiver unit 2020, and the second determining unit 2030 may be disposed in the system shown in FIG. 2 or the roadside device 200 shown in FIG. 3.

For example, the receiving unit 2110 and the sending unit 2120 may be disposed in the vehicle 100 shown in FIG. 1 or FIG. 3.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general-purpose processor, for example, a CPU or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All units of the foregoing apparatus may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of an SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the first determining unit 2010, the transceiver unit 2020, and the second determining unit 2030 may be performed by one processor, or may be performed by different processors. In a specific implementation process, the one or more processors may be a processor disposed in the roadside device 200 shown in FIG. 2, or the apparatus 2000 may be a chip disposed in the roadside device 200.

In a specific implementation process, the operations performed by the receiving unit 2110 and the sending unit 2120 may be performed by one processor, or may be performed by different processors. In a specific implementation process, the one or more processors may be a processor disposed in the vehicle 100 shown in FIG. 1 or FIG. 3, or the apparatus 2100 may be a chip disposed in the computing platform 150 shown in FIG. 1.

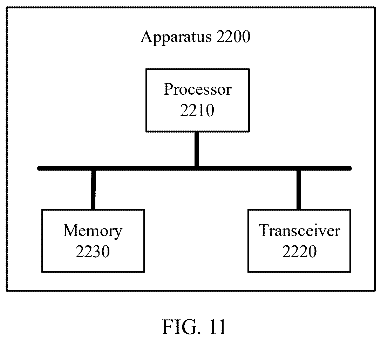

FIG. 11 is a block diagram of a monitoring apparatus according to an embodiment of this application. The monitoring apparatus 2200 shown in FIG. 11 may include a processor 2210, a transceiver 2220, and a memory 2230. The processor 2210, the transceiver 2220, and the memory 2230 are connected by using an internal connection path. The memory 2230 is configured to store instructions. The processor 2210 is configured to execute the instructions stored in the memory 2230, to implement the monitoring methods in the foregoing embodiments. Optionally, the memory 2230 may be coupled to the processor 2210 by using an interface, or may be integrated with the processor 2210.

It should be noted that the transceiver 2220 may include but is not limited to a transceiver apparatus of an input/output interface (input/output interface) type, to implement communication between the apparatus 2200 and another device or a communication network.

The memory 2230 may be a read-only memory (read-only memory, ROM), a static storage device, a dynamic storage device, or a random access memory (random access memory, RAM).

The transceiver 2220 uses, for example, but is not limited to, a transceiver apparatus of a transceiver type, to implement communication between the apparatus 2200 and another device or a communication network, to receive/send data/information used to implement the monitoring methods in the foregoing embodiments.

In a specific implementation process, the apparatus 2200 may be disposed in the computing platform 150 shown in FIG. 1, or the apparatus 2200 may be disposed in the roadside device 200 shown in FIG. 3.

An embodiment of this application further provides a vehicle. The vehicle includes the foregoing apparatus 2100.

An embodiment of this application further provides a roadside device. The roadside device includes the foregoing apparatus 2000.

An embodiment of this application further provides a monitoring system. The system includes the foregoing vehicle and the roadside device, or includes the foregoing apparatus 2000 and the foregoing apparatus 2100, or includes the foregoing apparatus 2200.

An embodiment of this application further provides a computer program product. The computer program product includes computer program code. When the computer program code is run on a computer, the computer is enabled to implement the monitoring methods in embodiments of this application.

An embodiment of this application further provides a computer-readable storage medium. The computer-readable medium stores computer instructions. When the computer instructions are run on a computer, the computer is enabled to implement the monitoring methods in embodiments of this application.

An embodiment of this application further provides a chip, including a circuit, configured to perform the monitoring methods in embodiments of this application.

In an implementation process, the steps in the foregoing methods can be implemented by using a hardware integrated logical circuit in the processor, or by using instructions in a form of software. The methods disclosed with reference to embodiments of this application may be directly performed and completed by a hardware processor, or may be performed and completed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A monitoring method, wherein the method is applied to a roadside device, and comprises:
determining operational design condition ODC information of a first area, wherein the ODC information indicates an ODC object and a status of the ODC object;
obtaining a preset ODC element of a vehicle; and
determining, based on the ODC information of the first area and the preset ODC element, whether an ODC of the vehicle exceeds a running boundary.

2. The method according to claim 1, wherein the method further comprises:
obtaining ODC information determined by the vehicle; and
the determining ODC information of a first area comprises:
determining the ODC information of the first area based on the ODC information determined by the vehicle and ODC information collected by the roadside device.

3. The method according to claim 2, wherein the determining whether an ODC of the vehicle exceeds a running boundary comprises:
when the ODC information collected by the roadside device comprises information about a first ODC object, and the ODC information determined by the vehicle does not comprise information about the first ODC object, determining, based on the information about the first ODC object and the preset ODC element, whether the ODC of the vehicle exceeds the running boundary.

4. The method according to claim 2 or 3, wherein the determining ODC information of a first area comprises:
when both the ODC information collected by the roadside device and the ODC information determined by the vehicle comprise information about a second ODC object, determining, based on the information about the second ODC object with higher data freshness and/or higher confidence, the ODC information of the first area.

5. The method according to any one of claims 2 to 4, wherein the method further comprises:
sending an ODC information reporting request to the vehicle, wherein the ODC information reporting request is used to request the ODC information determined by the vehicle.

6. The method according to claim 5, wherein the method further comprises:
generating the ODC information reporting request based on the ODC information collected by the roadside device, wherein
the ODC information reporting request comprises an information identifier field and a reporting requirement field, the information identifier field indicates an ODC object that needs to be reported by the vehicle, and the reporting requirement field indicates a condition that needs to be met by the ODC object reported by the vehicle.

7. The method according to any one of claims 1 to 6, wherein the method further comprises:
obtaining autonomous driving information of the vehicle, wherein the autonomous driving information indicates an autonomous driving function enabled by the vehicle; and
the determining whether an ODC of the vehicle exceeds a running boundary comprises:
when the autonomous driving function enabled by the vehicle is a first autonomous driving function, determining whether the ODC of the vehicle exceeds the running boundary.

8. The method according to claim 7, wherein the determining whether an ODC of the vehicle exceeds a running boundary comprises:
determining, based on the first autonomous driving function and the preset ODC element, an ODC element subset corresponding to the first autonomous driving function; and
determining, based on the ODC information of the first area and the ODC element subset, whether the ODC of the vehicle exceeds the running boundary.

9. The method according to any one of claims 1 to 8, wherein the method further comprises:
when the ODC of the vehicle exceeds the running boundary, performing at least one of the following:
saving indication information;
sending the indication information to the vehicle;
sending the indication information to a cloud server, wherein
the indication information indicates at least one of the following: the ODC of the vehicle exceeding the running boundary, or an ODC object and/or a status of an ODC object that are/is not collected by the vehicle.

10. The method according to any one of claims 1 to 9, wherein the method further comprises:
receiving an identity of the vehicle; and
the obtaining a preset ODC element of a vehicle comprises:
obtaining the preset ODC element from the cloud server based on the identity.

11. The method according to any one of claims 1 to 10, wherein the determining whether an ODC of the vehicle exceeds a running boundary comprises:
sending the ODC information of the first area to the cloud server;
receiving first information determined by the cloud server based on the ODC information of the first area and the preset ODC element, wherein the first information indicates whether the ODC of the vehicle exceeds the running boundary; and
determining, based on the first information, whether the ODC of the vehicle exceeds the running boundary.

12. A monitoring method, wherein the method is applied to a vehicle, and comprises:
receiving an ODC information reporting request sent by a roadside device; and
sending, based on the ODC information reporting request, ODC information determined by the vehicle, wherein the ODC information determined by the vehicle is used to determine ODC information of a first area, and the ODC information of the first area is used to determine whether an ODC of the vehicle exceeds a running boundary.

13. The method according to claim 12, wherein the method further comprises:
sending autonomous driving information to the roadside device, wherein the autonomous driving information indicates an autonomous driving function enabled by the vehicle, and the autonomous driving information is used to determine whether the ODC of the vehicle exceeds the running boundary.

14. The method according to claim 12 or 13, wherein the method further comprises:
sending an identity to the roadside device, wherein the identity is used to obtain a preset ODC element of the vehicle.

15. The method according to any one of claims 12 to 14, wherein the method further comprises:
receiving indication information, wherein the indication information indicates at least one of the following: the ODC of the vehicle exceeding the running boundary, or an ODC object and/or a status of an ODC object that are/is not collected by the vehicle.

16. A monitoring apparatus, wherein the apparatus is disposed on a roadside device, and comprises:
a first determining unit, configured to determine operational design condition ODC information of a first area, wherein the ODC information indicates an ODC object and a status of the ODC object;
a transceiver unit, configured to obtain a preset ODC element of a vehicle; and
a second determining unit, configured to determine, based on the ODC information of the first area and the preset ODC element, whether an ODC of the vehicle exceeds a running boundary.

17. The apparatus according to claim 16, wherein the transceiver unit is further configured to:
obtain ODC information determined by the vehicle; and
the first determining unit is configured to: determine the ODC information of the first area based on the ODC information determined by the vehicle and ODC information collected by the roadside device.

18. The apparatus according to claim 17, wherein the second determining unit is configured to:
when the ODC information collected by the roadside device comprises information about a first ODC object, and the ODC information determined by the vehicle does not comprise information about the first ODC object, determine, based on the information about the first ODC object and the preset ODC element, whether the ODC of the vehicle exceeds the running boundary.

19. The apparatus according to claim 17 or 18, wherein the first determining unit is configured to:
when both the ODC information collected by the roadside device and the ODC information determined by the vehicle comprise information about a second ODC object, determine, based on the information about the second ODC object with higher data freshness and/or higher confidence, the ODC information of the first area.

20. The apparatus according to any one of claims 16 to 19, wherein the transceiver unit is further configured to:
send an ODC information reporting request to the vehicle, wherein the ODC information reporting request is used to request the ODC information determined by the vehicle.

21. The apparatus according to claim 20, wherein the apparatus further comprises a generation unit, configured to:
generate the ODC information reporting request based on the ODC information collected by the roadside device, wherein
the ODC information reporting request comprises an information identifier field and a reporting requirement field, the information identifier field indicates an ODC object that needs to be reported by the vehicle, and the reporting requirement field indicates a condition that needs to be met by the ODC object reported by the vehicle.

22. The apparatus according to any one of claims 16 to 21, wherein the transceiver unit is further configured to:
obtain autonomous driving information of the vehicle, wherein the autonomous driving information indicates an autonomous driving function enabled by the vehicle; and
the second determining unit is configured to: when the autonomous driving function enabled by the vehicle is a first autonomous driving function, determine whether the ODC of the vehicle exceeds the running boundary.

23. The apparatus according to claim 22, wherein the second determining unit is configured to:
determine, based on the first autonomous driving function and the preset ODC element, an ODC element subset corresponding to the first autonomous driving function; and
determine, based on the ODC information of the first area and the ODC element subset, whether the ODC of the vehicle exceeds the running boundary.

24. The apparatus according to any one of claims 16 to 23, wherein the apparatus further comprises a processing unit, configured to:
save indication information when the ODC of the vehicle exceeds the running boundary, wherein the indication information indicates at least one of the following: the ODC of the vehicle exceeding the running boundary, or an ODC object and/or a status of an ODC object that are/is not collected by the vehicle; and
the transceiver unit is further configured to:
send the indication information to the vehicle; and/or
send the indication information to a cloud server.

25. The apparatus according to any one of claims 16 to 24, wherein the transceiver unit is further configured to:
receive an identity of the vehicle; and
obtain the preset ODC element from the cloud server based on the identity.

26. The apparatus according to any one of claims 16 to 25, wherein the transceiver unit is further configured to:
send the ODC information of the first area to the cloud server; and
receive first information determined by the cloud server based on the ODC information of the first area and the preset ODC element, wherein the first information indicates whether the ODC of the vehicle exceeds the running boundary; and
the second determining unit is configured to: determine, based on the first information, whether the ODC of the vehicle exceeds the running boundary.

27. A monitoring apparatus, wherein the apparatus is disposed in a vehicle, and comprises:
a receiving unit, configured to receive an ODC information reporting request sent by a roadside device; and
a sending unit, configured to send, based on the ODC information reporting request, ODC information determined by the vehicle, wherein the ODC information determined by the vehicle is used to determine ODC information of a first area, and the ODC information of the first area is used to determine whether an ODC of the vehicle exceeds a running boundary.

28. The apparatus according to claim 27, wherein the sending unit is further configured to:
send autonomous driving information to the roadside device, wherein the autonomous driving information indicates an autonomous driving function enabled by the vehicle, and the autonomous driving information is used to determine whether the ODC of the vehicle exceeds the running boundary.

29. The apparatus according to claim 27 or 28, wherein the sending unit is further configured to:
send an identity to the roadside device, wherein the identity is used to obtain a preset ODC element of the vehicle.

30. The apparatus according to any one of claims 27 to 29, wherein the receiving unit is further configured to:
receive indication information, wherein the indication information indicates at least one of the following: the ODC of the vehicle exceeding the running boundary, or an ODC object and/or a status of an ODC object that are/is not collected by the vehicle.

31. A monitoring apparatus, comprising:
a memory, configured to store a computer program; and
a processor, configured to execute the computer program stored in the memory, to enable the apparatus to perform the method according to any one of claims 1 to 11, or perform the method according to any one of claims 12 to 15.

32. A roadside device, comprising the apparatus according to any one of claims 16 to 26.

33. A vehicle, comprising the apparatus according to any one of claims 27 to 30.

34. A monitoring system, comprising the apparatus according to any one of claims 16 to 26 and the apparatus according to any one of claims 27 to 30; or comprising the roadside device according to claim 32 and the vehicle according to claim 33.

35. A computer-readable storage medium, wherein the computer-readable storage medium stores instructions, and when the instructions are executed by a processor, the processor is enabled to implement the method according to any one of claims 1 to 15.

36. A chip, wherein the chip comprises a circuit, and the circuit is configured to perform the method according to any one of claims 1 to 15.
